# EUROPEAN PATENT SPECIFICATION

(11) **EP 3 126 189 B1**
(45) Date of publication and mention of the grant of the patent: **04.07.2018**
(21) Application number: 15741938.3
(22) Date of filing: 07.04.2015
(51) Int. Cl.: B60N 2/70, A47C 27/14

(54) **VEHICLE SEAT CUSHION WITH FOAM SPRINGS**
FAHRZEUGSITZKISSEN MIT SCHAUMFEDERN
COUSSIN DE SIÈGE DE VÉHICULE AVEC RESSORTS EN MOUSSE

(30) Priority: 04.04.2014 DE 102014004983
(43) Date of publication of application: 08.02.2017
(73) Proprietor: Elisana Sarl, 1246 Luxembourg (LU)
(72) Inventor: CESKO, Sandi, 1411 Izlake (SI)
(74) Representative: Müller Hoffmann & Partner
(86) International application number: PCT/EP2015/057518
(87) International publication number: WO 2015/150576

(56) References cited:
- EP-A1- 2 421 410
- EP-A2- 1 293 152
- WO-A1-2014/106592
- DE-U1- 29 805 926
- US-A- 5 816 661

## Description

### BACKGROUND

The invention relates to a vehicle seat cushion according to claim 1.

Vehicle seat cushions should meet several requirements. They should provide a stable support in case of impacts, and they should be comfortable during normal vehicle operation.
DE 298 05 926 U1 discloses a vehicle seat cushion having a core piece made out of foam and a plurality of tubular sections which are integral with the core piece and extending perpendicularly to the surface of the seat.
EP 1 293 152 A2 discloses a vehicle seat cushion, wherein a plurality of cylindrical form pieces made out of foam or other materials are arranged in a box, with a plurality of such boxes inserted into the seat.
It is an object of the invention to provide a vehicle seat cushion for a vehicle seat which allows stable support in case of impacts and comfort during driving.
This object is solved by a vehicle seat cushion according to independent claim 1. Further developments are described in the dependent claims.

A vehicle seat cushion comprises a cushion pad having in its upper surface a recess and a plurality of tubular-shaped foam springs that are located in the recess, fixed to the cushion pad by gluing and thus embedded into the cushion pad. Thus, by the arrangement of the foam springs within the cushion pad stable support in case of impacts and a comfortable feeling durig driving can be achieved.
Thus, in an embodiment, the plurality of foam springs are arranged centrally in a width direction of the cushion pad. Alternatively, the plurality of foam springs substantially extend over the whole surface area of the cushion pad.
In an embodiment the stiffness (rigidity) of the foam springs varies depending on the position of the respective foam spring in the cushion pad. So, areas with a lower resilience (higher stiffness) may be provided, e.g. for providing support in case of impacts and/ or due to the load by the passenger, and areas with a higher resilience (lower stiffness) may be provided that are not subjected to the whole weight of the passenger for providing a comfortable feeling to the passenger.
In an embodiment, the foam springs are arranged in a main area of the cushion pad and along a side area of the cushion pad. The foam springs arranged along the side area may provide support for the driver during driving, in particular when driving along a curve, or in case of a side impact.

In an embodiment, the foam springs may be arranged in a regular pattern, i.e. at least some of the foam springs are arranged in columns extending in a longitudinal direction of the cushion pad and in rows extending in a width direction of the cushion pad.

As described above, the cushion may be a backrest cushion or a seating surface cushion.

In an embodiment, each of the foam springs has a tubular resilient body made of foam with holes radially extending through the tubular resilient body. The holes may be provided in areas of the tubular resilient body which alternate in a regular pattern with areas of the tubular resilient body that are not provided with holes, wherein the areas that are not provided with holes form longitudinal reinforcement ribs of the foam spring.

The reinforcement ribs assist to prevent the foam from bulging out side ways when compressed under load, even when a lower density or stiffness of foam is used. Since the foam spring does not have the tendency to bulk out in a radial or lateral direction when being compressed in a longitudinal direction, the diameter of the tubular spring is essentially preserved.

Further, the use of lower density foam, without loss of the major static and dynamic properties of the spring, reduces the raw material materials cost and energy consumption providing at the same time important gains in production time.

A further advantage is that the reinforcement ribs form an integral part of the tubular body and can be produced in one and the same production step, which results in high production speeds and consequently low production costs.

In an embodiment, the holes are arranged along lines extending in a longitudinal direction of the tubular resilient body, wherein the holes that are arranged along adjacent lines are offset with respect to each other in the longitudinal direction.

The above-described preferred embodiment of a foam spring incorporated into an embodiment of a vehicle seat cushion is disclosed in European patent specification EP 2 421 410 B1 and in European patent specification EP 2 554 077 B1.

The foam spring known from these documents, which, in an embodiment, is used in the vehicle seat cushion, concerns a foam spring which has a tubular resilient body made of foam and forms an outer wall, with holes extending inwardly from an outside surface to an inside surface, those holes being arranged in a staggered symmetry and mainly being diamond shaped. The tubular body displays the holes only over a limited part of its surface, and this limited part is regularly alternating with a limited part of the surface that is not provided with the holes and which forms longitudinal reinforcement ribs in the wall of the tubular body of the spring.

A major advantage of this spring is that, together with their even spacing in the tubular body of the spring, the reinforcement ribs allow for a very much improved distribution of the compression forces when the spring is under load, not necessitating anymore the incorporation of a metal spring or additionally reinforcements, or the use of foam layers of different density, or the like, as taught in the prior art.

Additionally, the reinforcement ribs formed as described above prevent the foam better from bulging out side ways when compressed under load, even when a lower density foam is used to form the body.

As described above, a major advantage is that the reinforcement ribs form an integral part of the tubular body and are produced in one and the same production step, not creating any problems of adhesion, delamination, assembly, storage and procurement of individual components etc.

Another advantage is that, as a result of this, the springs are less prone to damage due to rough handling during manufacturing and assembly.

Therefore less care has to be taken not to damage the springs during production, assembly, handling, storage, installations etc. which invariably results in higher production speeds and a reduction of overall reject rates.

The longitudinal reinforcement ribs will in turn prevent the elastic properties of the springs from being less influenced by adjoining compressed springs, making the resilient behaviour of each individual spring better predictable.

Another advantage of the springs is that, due to the creation of the evenly spaced reinforcement ribs and the absence of other constructional elements, like e.g. metal wire springs, in the tubular wall, the springs are better resistant against damage due to rough handling during manufacturing and assembling, and considerably reduces their weight and complexity.

Another advantage is that the resilient behaviour of the spring can easily be adjusted not only by a judicious choice of the raw materials and the foam made therefrom, but also by the relative proportion of the parts that are provided with holes and the ones that are not and by their geometrical arrangement and relative distribution along the body of the spring.

According to a preferred embodiment of the foam spring, the part of the body that is not provided with holes and therefore forms a plurality of reinforcement ribs extends from the bottom till the top of the tubular body.

According to a further preferred embodiment of the foam spring the holes are not only staggered with respect to each other, but also with respect to the holes formed in any adjacent part that is separated from these parts by a part that is not provided with the holes.

According to a further preferred embodiment the outside surface of the part that is not provided with holes exhibits a sine shape over a part or over the total axial length of the spring.

According to a further preferred embodiment the non perforated parts form a plurality of reinforcement ribs equally spaced along the periphery of the tubular body and along its longitudinal axis.

According to a further preferred embodiment the number of the parts that are not provided with holes and thus form reinforcement ribs lies between 4 and 12, preferably between 6 and 10, more preferably equals 8.

According to a further preferred embodiment the spring comprises a strip with at least one foam layer and a series of slits extending in one direction and surrounded by corresponding areas that do not contain any slits, and two opposite ends extending in the direction of the slits, the opposite ends of the strip being bent into proximity to each other and glued together to form said hollow tubular body and to form said holes into a diamond shape by stretching the slits in a transverse direction due to the bending of the strip, and to turn the non slotted areas into reinforcing ribs regularly spaced along the periphery of the tubular body and aligned along its longitudinal axis.

According to a further preferred embodiment the slits in the strip extend along a plurality of interrupted parallel lines.

According to a further preferred embodiment the slits in the strip are positioned according to a staggered pattern, wherein the slits along adjacent lines are offset in their longitudinal direction.

According to a preferred embodiment the slits in the strip between two adjacent areas that are separated by a non slotted area, are positioned according to a staggered pattern, wherein the slits along adjacent lines are offset in their longitudinal direction.

Further details of the invention will become apparent from the consideration of the accompanying drawings and the ensuing description.

### BRIEF DESCRIPTION OF THE SEVERAL VIEWS OF THE DRAWINGS

The drawings are included to provide a further understanding of embodiments and are incorporated in and constitute part of this specification. The drawings illustrate embodiments and together with the description serve to explain principles of embodiments. Other embodiments and many of the intended advantages will be readily appreciated as they become better understood by reference of the following detailed description. The elements of the drawings not necessarily scale relative to each other. Corresponding or similar parts of the embodiments are designated with the same reference numerals increased by one hundred.
**Fig. 1** illustrates in a schematic manner a first embodiment of vehicle seat cushions, i.e. of a seating surface cushion and of a backrest cushion with foam springs, in a perspective view.
**Fig. 2** illustrates in a schematic manner a second embodiment of vehicle seat cushions, i.e. of a seating surface cushion with foam springs arranged over the whole surface area and of a backrest cushion with foam springs, in a perspective
**Fig. 3** illustrates a schematic perspective view of a foam spring incorporated into the vehicle seat cushions of the first and second embodiments.

### DETAILED DESCRIPTION

In the following, embodiments of the invention are described.

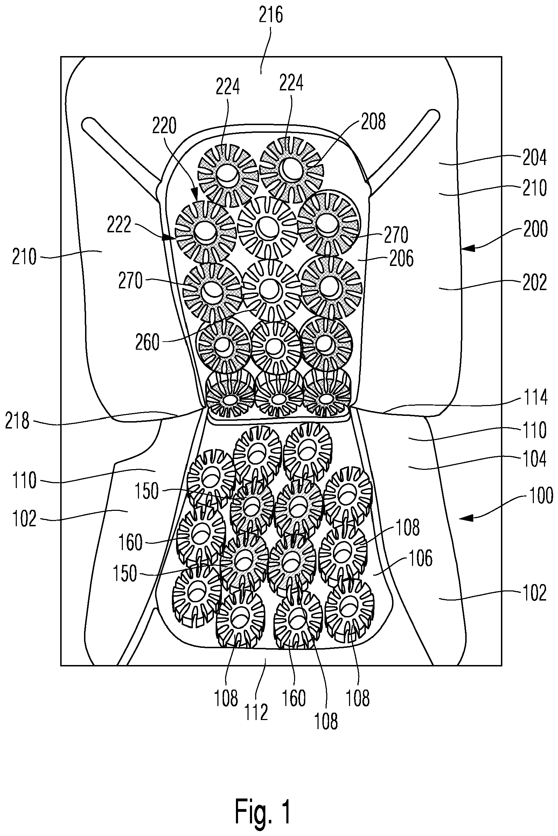

Fig. 1 illustrates a first embodiment of a vehicle seat cushion for the seating area of the vehicle seat, i.e. a seating surface cushion 100, and a first embodiment of a vehicle seat cushion for the backrest of the vehicle seat, i.e. a backrest cushion 200.

The seating surface cushion 100 comprises a cushion pad 102 that is formed in the shape of the vehicle seating area, i.e. a seating surface cushion pad 102. The seating surface cushion pad 102 has in its upper surface 104 a recess 106 in which a plurality of foam springs 108 are located. The plurality of foam springs 108 are thus embedded into the cushion pad 102. The plurality of foam springs 108 are arranged centrally in a width direction of the cushion pad 102, which is also the width direction of the seating surface cushion 100. Thus, the plurality of foam springs 108 do not extend over the whole width direction of the cushion pad 102, and lateral regions 110 of the cushion pad 102 are not provided with foam springs 108. Consequently, the recess 106 formed in the seating surface cushion pad 102 for receiving the foam springs 108 does not extend to the lateral regions 110 of the seating surface cushion pad 102.

In a longitudinal direction of the seating surface cushion pad 102, i.e. in a direction which extends from a front end 112 of the seating surface cushion pad 102 to a rear end 114 of the seating surface cushion pad 102, the foam springs 108 do not extend to the longitudinal ends. Thus, in the present example, the foam springs 108 are embedded into a middle part of the seating surface cushion pad 102 and are surrounded or framed by the seating surface cushion pad 102.

Further, the foam springs 108 are arranged in close vicinity to adjacent foam springs 108, so that adjacent foam springs 108 may contact each other.

Like the seating surface cushion 100, the backrest cushion 200 comprises a cushion pad 202 that is formed in the shape of the vehicle backrest, i.e. a backrest cushion pad 202. The backrest cushion pad 202 also has in its upper surface 204 a recess 206 in which a plurality of foam springs 208 are located. The plurality of foam springs 208 are thus embedded into the backrest cushion pad 202. The plurality of foam springs 208 are arranged centrally in a width direction of the backrest cushion pad 202, which is also the width direction of the backrest cushion 200. Thus, the plurality of foam springs 208 do not extend over the whole width direction of the cushion pad 202, and lateral regions 210 of the backrest cushion pad 202 are not provided with foam springs 208. Consequently, the recess 206 formed in the cushion pad 202 for receiving the foam springs 208 does not extend to the lateral regions 210 of the cushion pad 202.

In a longitudinal direction of the backrest cushion pad 202, i.e. in a direction which extends from an upper end 216 of the backrest cushion pad to a lower end 218 of the backrest cushion pad 202, the plurality of foam springs 208 extend to the longitudinal end which is proximal to the seating surface cushion 100, i.e. to the lower end 218, and they do not extend to the longitudinal end that is distal from the seating surface cushion 100, i.e. the upper end 216.
The foam springs 108, 208 or at least some of the foam springs 108, 208 may be arranged in a regular pattern. Thus, in the present example, some of the foam springs 208 are arranged in columns 220 extending in a longitudinal direction of the backrest cushion pad 202 and in rows 222 that are arranged in a width direction of the backrest cushion pad 202. In the present example embodiment, the foam springs 208 are arranged in a regular pattern of three columns 220 and four rows 222, wherein two foam springs 224 located towards the upper longitudinal end are not arranged in this regular pattern.
Moreover, a cover layer (not shown) may be provided for covering the top side of the foam springs 108, 208 and the seating surface cushion pad 102. The cover layer may be made of foam also und thus of the same material as the seating surface cushion pad 102 or the foam springs 108, 208.

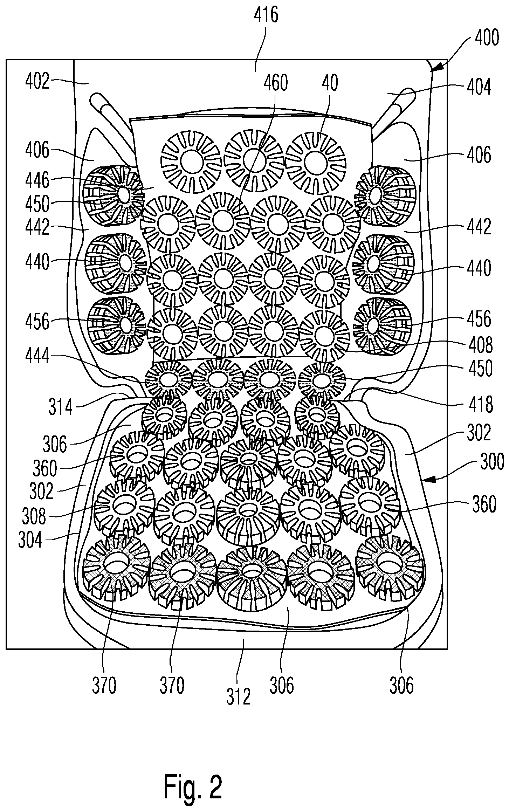

Fig. 2 illustrates a second embodiment of a vehicle seat cushion for the seating area of the vehicle seat, i.e. a seating surface cushion 300, and a second embodiment of a vehicle seat cushion for the backrest of the vehicle seat, i.e. a backrest cushion 400.
As the seating surface cushion 100 of the first embodiment, the seating surface cushion 300 of the second embodiment comprises a cushion pad 302 that is formed in the shape of the vehicle seating area, i.e. a seating surface cushion pad 302. Further, as in the first embodiment, the seating surface cushion pad 302 has in its upper surface 304 a recess 306 in which a plurality of foam springs 308 are located. The plurality of foam springs 308 are thus embedded into the seating surface cushion pad 302. However, contrary to the first embodiment, in the second embodiment the foam springs 308 do extend over the whole area of the seating surface cushion pad 302 and thus also over the whole seating area of the vehicle seat comprising the seating surface cushion 300. Thus, the foam springs extend to both lateral ends in a width direction and to the rear end 314 and front end 312 of the seating surface cushion pad 302 in a longitudinal direction.

The backrest cushion 400 of the second embodiment comprises a cushion pad 402 that is formed in the shape of the vehicle backrest, i.e. a backrest cushion pad 402. The backrest cushion pad 402 has in its upper surface 404 a recess 406 in which a plurality of foam springs 408 are located. The plurality of foam springs 408 are thus embedded into the backrest cushion pad 402. Unlike in the backrest cushion 200 of the first embodiment the plurality of foam springs 408 are not arranged centrally in a width direction of the backrest cushion pad 402, but they do extend substantially over the whole width of the backrest cushion pad 402.

In a longitudinal direction of the backrest cushion pad 402, i.e. in a direction which extends from an upper end 416 of the backrest cushion pad 402 to a lower end 418 of the backrest cushion pad 402, the plurality of foam springs 408 extend to the longitudinal end which is proximal to the seating surface cushion 300, i.e. to the lower end 418, and they do not extend to the longitudinal end that is distal from the seating surface cushion 300, i.e. the lower end 418.

Further, the backrest cushion 400 of the second embodiment comprises foam springs 440 that are arranged along side areas 442 of the cushion pad 402, in addition to the foam springs 444 located in a main area 446 of the cushion pad 402.

The foam springs 108, 208, 308, 408 may be differently configured depending on their position in the cushion pad 102, 202, 302, 402. Thus, they may for example have a different axial length L, a different diameter and may be made of a different foam material. Further, the surface or the structure of the foam springs 108, 208, 308, 408 may also be differently configured, as is described in more deatil below. The different configurations result in a different resilient behaviour, in particular in a different stiffness of the respective foam springs 108, 208, 308, 408.

So, in the seating surface cushion 100 of the first embodiment two different types of foam springs 108 are used. Specifically, four foam springs 150 of a first type are arranged in the middle part, which are surrounded by a plurality of foam springs 160 of a second type. The foam springs 160 of the second type may be more resilient (with higher stiffness) than the foam springs 150 of the first type, i.e. they may be softer than the foam springs 150 of the first type. The foam springs 150 of the first type are located in an area of the seating surface where the main part of the vehicle passenger's weight comes into effect.

In the backrest cushion 200 of the first embodiment foam springs 260 of the second type are arranged in the middle part, which are partly surrounded by a plurality of foam springs 270 of a third type. The foam springs 270 of the third type may be more resilient (with higher stiffness) than the foam springs 260 of the second type. By this it is taken into account that more weight is put onto the middle part of the backrest by a passenger using the vehicle seat cushion.

In the seating surface cushion 300 of the second embodiment foam springs 360 of the second type are distributed over almost the whole seating surface area, with the exception of the foam springs 370 located towards the longitudinal end 312 of the cushion pad 302 which is distal to the backrest cushion pad 302, which are of the third type and thus more resilient. By this arrangement a relief of the passenger's thighs may be achieved.

In the backrest cushion 400 of the second embodiment foam springs 460 of the second type are distributed over almost the whole area of the backrest where foam springs 408 are provided, with the exception of foam springs 450 of the first type which are located towards the longitudinal end of the cushion pad 402 which is proximal to the seating surface cushion pad 402, and those which are further located along the side areas 442 of the backrest cushion pad 402.

The foam springs 450 along the side areas 442 are provided for damping a side impact of the vehicle equipped with the vehicle seat cushion 402.

The invention is not limited to the above described arrangements, but any other arrangements of the foam springs may be possible. For example, the foam springs may not be arranged in close vicinity to each other in a common recess formed in the cushion pad, but a recess in the cushion pad may be provided for every foam spring so that the foam springs are separated from each other by the foam material of the cushion pad.

Moreover, the stiffness of the foam springs may be varied in accordance to the needs of the designer of the car seat or of the user of the seat. In particular, it is easily possible for a seat making company to adapt the vehicle seat and the stiffness of the seating surface as well as of the backrest to the special needs of the customer. The customer or driver may order a stiffness/rigidity of the vehicle seat according to his individual body contour (contour of customer's back), body size, weight or comfort wishes so that the vehicle seat may be produced according to his individual requests.

The foam springs may be made of every foam material, e.g. of polyurethane foam or of memory foam.

The cushion pad may be made of any suitable material, e.g. of a foam material.

The foam springs may be supported by the cushion pad and are fixed to the cushion pad by gluing. They also may be fixed to an additional layer, e.g. a fleece layer.

The foam springs 108, 208, 308, 408 illustrated in Figs. 1 and 2 of the drawings are covered by a cover layer (which is not seen here), which may be the cover of the vehicle seat. Between the cover and the foam springs an additional thin layer may be provided, e.g. a thin layer of the cushion pad material.

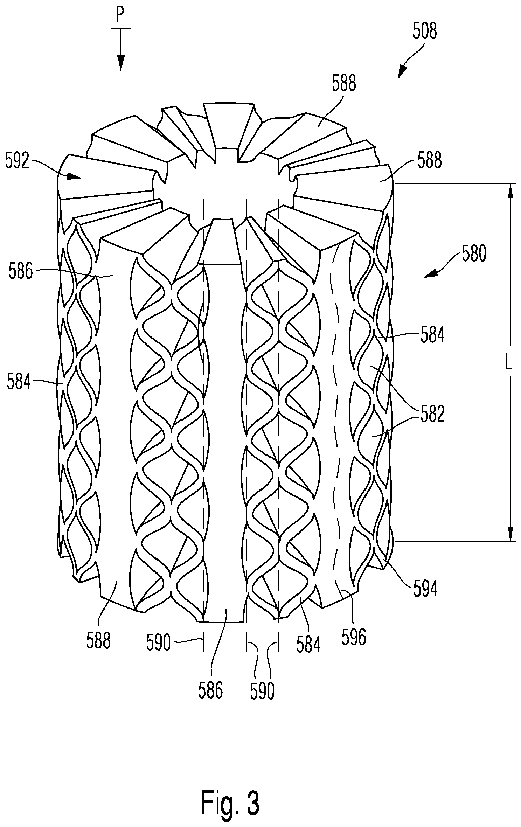

Fig. 3 shows a foam spring 508 which corresponds to a foam spring 108, 208, 308, 408 of the first and second embodiments in more detail. Such a foam spring 508 is known from European patent EP 2 421 410 B1 and from European patent EP 2 554 077 B1.

As can be seen in Fig. 3, the foam spring 508 has a tubular resilient body 580 made of foam with holes 582 that radially extend through the tubular resilient body 580. The holes 582 are provided in areas 584 of the tubular resilient body 580 which alternate regularly with areas 586 of the tubular resilient body 580 that are not provided with holes 582. The areas 586 without holes 582 form longitudinal reinforcement ribs 588 of the tubular body 580. Further, the holes 582 are arranged along lines 590 that extend in a longitudinal direction of the tubular resilient body 580.

The holes 582 that are arranged along adjacent lines 590 in an area 584 are preferably offset with respect to each other in the longitudinal direction. Further, also the holes 582 that are arranged along adjacent lines 590 in adjacent areas 584, which are separated from each other by a reinforcement rib 588, are preferably offset with respect to each other.

The holes 582 preferably extend in a longitudinal direction from a top surface 592 of the tubular resilient body 580 to a bottom surface 594 of the tubular resilient body 580, i.e. they extend over a total axial length L of the foam spring, but it is not excluded that the holes 582 extend only over a part of the axial length L. Likewise, the reinforcing ribs 588 preferably extend over the whole axial length L of the foam spring, but it is not excluded that the reinforcing ribs 588 extend only over a part of the axial length L.

The shape of the reinforcing ribs 588 is a wave form in the longitudinal direction of the tubular resilient body 580, as represented by the dotted line 596. Due to the wave form of the reinforcing ribs 588 a deflection of the foam spring 508 in the direction represented by the arrow P is adapted to be converted into a tangential deformation of the wave-shaped reinforcement ribs 588.

The foam springs 508 may be differently configured. They may have a different axial length L, a different diameter and may be made of a different foam material. Further, the relative proportion of the areas 584 that are provided with holes 582 and the areas 586 that are not provided with holes 582, the geometrical arrangement of the two areas 584, 586 and the relative distribution of the two areas 584, 586 along the tubular body 580 may vary from spring to spring, thereby leading to a different resilient behaviour. Thus, as described above, areas of the vehicle seat cushion with different reslience and firmness can be achieved.

The above-described configuration of the foam spring 508 allows for any deformation of the foam spring 508 along the direction represented by the arrow P to be evenly distributed over the entire body 580 of the foam spring 508, thus limiting any radial bulging out of the spring 508 and preventing compression forces to be concentrated only in one part of the foam spring 508 instead of being evenly distributed over the entire tubular body 580 of the foam spring 508. Since the foam spring 508 does not have the tendency to bulk out in a radial or lateral direction when being being compressend in a direction represented by the arrow P, the diameter of the tubular spring is essentially preserved. Thus, the elastic properties of the foam springs are less influenced by adjoining compressed springs, making the resilient bahaviour of each individual spring better predictable when used in the vehicle seat cushion.

Another advantage of the foam spring 508 is that the resilience, compressive strength, and useful life time of the spring 508 is markedly enhanced, even when lower density foam is used for its construction.

## Claims

1. Vehicle seat cushion (100, 200, 300, 400), including
- a cushion pad (102, 202, 302, 402) having in its upper surface (104, 204) a recess (106, 206), and
- a plurality of tubular-shaped foam springs (108, 208, 308, 408) that are located in the recess (106, 206), fixed to the cushion pad (102, 202, 302, 402) by gluing and thus embedded into the cushion pad (102, 202, 302, 402).

2. Vehicle seat cushion (100, 200) according to claim 1, wherein the plurality of foam springs (108, 208) are arranged centrally in a width direction of the cushion pad (102, 202).

3. Vehicle seat cushion (300, 400) according to claim 1, wherein the plurality of foam springs (308, 408) substantially extend over the whole surface area of the cushion pad (302, 402).

4. Vehicle seat cushion (100, 200, 300, 400) according to any of the preceding claims, wherein the stiffness of the foam springs (108, 208, 308, 408) varies depending on the position of the respective foam spring (108, 208, 308, 408) in the cushion pad (102, 202, 302, 402).

5. Vehicle seat cushion (400) according to any of the preceding claims, wherein the plurality of foam springs (108, 208, 308, 408) are arranged in a main area (446) of the cushion pad (402) and along a side area (442) of the cushion pad (402).

6. Vehicle seat cushion (100, 200, 300, 400) according to any of the preceding claims, wherein at least some of the plurality of foam springs (108, 208, 308, 408) are arranged in columns (220) extending in a longitudinal direction of the cushion pad (102, 202, 302, 402) and in rows (222) extending in a width direction of the cushion pad (102, 202, 302, 402).

7. Vehicle seat cushion (100, 200, 300, 400) according to any of the preceding claims, wherein the plurality of foam springs (108, 208 308, 408) extend to a longitudinal end (114, 218, 314, 418) of the cushion.

8. Vehicle seat cushion according to any of the preceding claims, wherein the cushion is a backrest cushion (200,400) or a seating surface cushion (100, 300).

9. Vehicle seat cushion (200, 400) according to claims 7 and 8, wherein the longitudinal end (218, 418) is the longitudinal end of the backrest cushion (200, 400) proximal to the seating surface cushion (100, 300).

10. Vehicle seat cushion (100, 200, 300, 400) according to any of the preceding claims, wherein the plurality of foam springs (108, 208, 308, 408, 508) have a tubular resilient body (580) made of foam with holes (582) radially extending through the tubular resilient body (580).

11. Vehicle seat cushion (100, 200, 300, 400) according to claim 10, wherein the holes (582) are provided in areas (584) of the tubular resilient body (580) which alternate in a regular pattern with areas (586) of the tubular resilient body (580) that are not provided with holes (581), wherein the areas (586) that are not provided with holes (582) form longitudinal reinforcement ribs (588) of the foam spring (508).

12. Vehicle seat cushion (100, 200, 300, 400) according to claim 10 or 11, wherein the holes (582) are arranged along lines (590) extending in a longitudinal direction of the tubular resilient body(580), and wherein the holes (582) that are arranged along adjacent lines (590) are offset with respect to each other in the longitudinal direction.

## Patentansprüche

1. Fahrzeugsitzpolster (100, 200, 300, 400), umfassend
ein Polsterkissen (102, 202, 302, 402), das in seiner Oberseite (104, 204) eine Vertiefung (106, 206) aufweist, und
eine Vielzahl rohrförmiger Schaumfedern (108, 208, 308, 408), die in der Vertiefung (106, 206) gelegen, mittels Kleben an dem Polsterkissen (102, 202, 302, 402) befestigt und somit in das Polsterkissen (102, 202, 302, 402) eingebettet sind.

2. Fahrzeugsitzpolster (100, 220) nach Anspruch 1, wobei die Vielzahl von Schaumfedern (108, 208) in einer Breitenrichtung des Polsterkissens (102, 202) mittig angeordnet ist.

3. Fahrzeugsitzpolster (300, 400) nach Anspruch 1, wobei sich die Vielzahl von Schaumfedern (308, 408) im Wesentlichen über die gesamte Oberfläche des Polsterkissens (302, 402) erstreckt.

4. Fahrzeugsitzpolster (100, 200, 300, 400) nach einem der vorhergehenden Ansprüche, wobei sich die Steifigkeit der Schaumfedern (108, 208, 308, 408) in Abhängigkeit von der Position der jeweiligen Schaumfeder (108, 208, 308, 408) im Polsterkissen (102, 202, 302, 402) unterscheidet.

5. Fahrzeugsitzpolster (400) nach einem der vorhergehenden Ansprüche, wobei die Vielzahl von Schaumfedern (108, 208, 308, 408) in einer Hauptfläche (446) des Polsterkissens (402) und entlang einer Seitenfläche (442) des Polsterkissens (402) angeordnet ist.

6. Fahrzeugsitzpolster (100, 200, 300, 400) nach einem der vorhergehenden Ansprüche, wobei zumindest einige der Vielzahl von Schaumfedern (108, 208, 308, 408) in Säulen (220), die sich in einer longitudinalen Richtung des Polsterkissens (102, 202, 302, 402) erstrecken, und in Reihen (222) angeordnet sind, die sich in einer Breitenrichtung des Polsterkissens (102, 202, 302, 402) erstrecken.

7. Fahrzeugsitzpolster (100, 200, 300, 400) nach einem der vorhergehenden Ansprüche, wobei sich die Vielzahl von Schaumfedern (108, 208, 308, 408) zu einem longitudinalen Ende (114, 218, 314, 418) des Polsters erstreckt.

8. Fahrzeugsitzpolster nach einem der vorhergehenden Ansprüche, wobei das Polster ein Rückenpolster (200, 400) oder ein Sitzflächenpolster (100, 300) ist.

9. Fahrzeugsitzpolster (200, 400) nach Ansprüchen 7 und 8, wobei das longitudinale Ende (218, 418) das zum Sitzflächenpolster (100, 300) proximal gelegene longitudinale Ende des Rückenpolsters (200, 400) ist.

10. Fahrzeugsitzpolster (100, 200, 300, 400) nach einem der vorhergehenden Ansprüche, wobei die Vielzahl von Schaumfedern (108, 208, 308, 408, 508) einen rohrförmigen elastischen Körper (580) aufweist, der aus Schaum mit Löchern (582) besteht, die sich radial durch den rohrförmigen elastischen Körper (580) erstrecken.

11. Fahrzeugsitzpolster (100, 200, 300, 400) nach Anspruch 10, wobei die Löcher (582) in Flächen (584) des rohrförmigen Körpers (580) vorgesehen sind, die sich in einem regelmäßigen Muster mit Flächen (586) des rohrförmigen elastischen Körpers (580) abwechseln, die nicht mit Löchern (582) versehen sind, wobei die Flächen (586), die nicht mit Löchern (582) versehen sind, longitudinale Verstärkungsrippen (588) der Schaumfeder (508) bilden.

12. Fahrzeugsitzpolster (100, 200, 300, 400) nach Anspruch 10 oder 11, wobei die Löcher (582) entlang Linien (590) angeordnet sind, die in einer longitudinalen Richtung des rohrförmigen elastischen Körpers (580) verlaufen, und wobei die Löcher (582), die entlang benachbarten Linien (590) angeordnet sind, in Bezug aufeinander in der longitudinalen Richtung versetzt sind.

## Revendications

1. Coussin de siège de véhicule (100, 200, 300, 400) comprenant
- un rembourrage de coussin (102, 202, 302, 402) qui présente dans sa surface supérieure (104, 204) une cavité (106, 206), et
- plusieurs ressorts en mousse de forme tubulaire (108, 208, 308, 408) qui se trouvent dans la cavité (106, 206), qui sont fixés au rembourrage de coussin (102, 202, 302, 402) par collage et qui sont ainsi encastrés dans le rembourrage de coussin (102, 202, 302, 402).

2. Coussin de siège de véhicule (100, 200) selon la revendication 1, dans lequel lesdits ressorts en mousse (108, 208) sont disposés de manière centrée dans le sens de la largeur du rembourrage de coussin (102, 202).

3. Coussin de siège de véhicule (300, 400) selon la revendication 1, dans lequel lesdits ressorts en mousse (308, 408) s'étendent globalement sur toute la superficie du rembourrage de coussin (302, 402).

4. Coussin de siège de véhicule (100, 200, 300, 400) selon l'une quelconque des revendications précédentes, dans lequel la rigidité des ressorts en mousse (108, 208, 308, 408) varie en fonction de la position du ressort en mousse (108, 208, 308, 408) respectif dans le rembourrage de coussin (102, 202, 302, 402).

5. Coussin de siège de véhicule (400) selon l'une quelconque des revendications précédentes, dans lequel lesdits ressorts en mousse (108, 208, 308, 408) sont disposés dans une zone principale (446) du rembourrage de coussin (402) et le long d'une zone latérale (442) dudit rembourrage de coussin (402).

6. Coussin de siège de véhicule (100, 200, 300, 400) selon l'une quelconque des revendications précédentes, dans lequel certains au moins desdits ressorts en mousse (108, 208, 308, 408) sont disposés en colonnes (220) qui s'étendent dans un sens longitudinal du rembourrage de coussin (102, 202, 302, 402), et en rangées (222) qui s'étendent dans le sens de la largeur du rembourrage de coussin (102, 202, 302, 402).

7. Coussin de siège de véhicule (100, 200, 300, 400) selon l'une quelconque des revendications précédentes, dans lequel lesdits ressorts en mousse (108, 208, 308, 408) s'étendent jusqu'à une extrémité longitudinale (114, 218, 314, 418) du coussin.

8. Coussin de siège de véhicule selon l'une quelconque des revendications précédentes, dans lequel le coussin est un coussin de dossier (200, 400) ou un coussin de surface d'assise (100, 300).

9. Coussin de siège de véhicule (200, 400) selon les revendications 7 et 8, dans lequel l'extrémité longitudinale (218, 418) est l'extrémité longitudinale du coussin de dossier (200, 400) proximale par rapport au coussin de surface d'assise (100, 300).

10. Coussin de siège de véhicule (100, 200, 300, 400) selon l'une quelconque des revendications précédentes, dans lequel lesdits ressorts en mousse (108, 208, 308, 408) ont un corps élastique tubulaire (580) composé de mousse avec des trous (582) qui s'étendent radialement à travers ledit corps élastique tubulaire (580).

11. Coussin de siège de véhicule (100, 200, 300, 400) selon la revendication 10, dans lequel les trous (582) sont prévus dans des zones (584) du corps élastique tubulaire (580) qui alternent suivant un modèle régulier avec des zones (586) du corps élastique tubulaire (580) non pourvues de trous (582), les zones (586) non pourvues de trous (582) formant des nervures de renforcement longitudinales (588) du ressort en mousse (508).

12. Coussin de siège de véhicule (100, 200, 300, 400) selon la revendication 10 ou 11, dans lequel les trous (582) sont disposés le long de lignes (590) qui s'étendent dans un sens longitudinal du corps élastique tubulaire (580), et les trous (582) qui sont disposés le long de lignes (590) adjacentes sont décalés les uns par rapport aux autres dans le sens longitudinal.
